# EUROPÄISCHE PATENTANMELDUNG

(11) **EP 4 412 154 A1**
(43) Veröffentlichungstag der Anmeldung: **07.08.2024**
(21) Anmeldenummer: 23154321.6
(22) Anmeldetag: 31.01.2023
(51) Int. Cl.: H04L 9/40, H04L 67/12, H04L 67/55, H04W 12/08, H04W 12/63, G07B 15/04, G07C 9/00

(54) **VERFAHREN ZUM STEUERN VON ORTSFESTEN PASSIERELEMENTEN, PASSIERELEMENT UND NETZWERK**

(71) Anmelder: Siemens Aktiengesellschaft, 80333 München (DE)
(72) Erfinder: Hohl, Hubertus, 79219 Staufen (DE); Sauer, Markus, 81739 München (DE)
(74) Vertreter: Siemens Patent Attorneys

(57) **Zusammenfassung**

Bei dem Verfahren zum Steuern von ortsfesten Passierelementen mittels mobiler Einheiten folgen die mobilen Einheiten einem Pfad entlang mindestens eines Passierelementes und dem Passierelement ist ein erster Ort zur Freigabe des Passierelements zugeordnet, wobei mittels der mobilen Einheiten ein Erreichen des ersten Orts durch die mobile Einheit mittels mindestens einer Publish-Subscribe-Nachricht publiziert wird, mittels der das Passierelement zur Freigabe des Pfads aufgefordert wird.

## Beschreibung

Die Erfindung betrifft ein Verfahren zum Steuern von ortsfesten Passierelementen, ein ortsfestes Passierelement sowie ein Netzwerk

Im Zuge der Industrie 4.0., d. h. der flexiblen und/oder autonomen Produktion und Logistik und deren durchgehender Digitalisierung mit Technologien aus den Bereichen IoT, AI, Edge, Cloud, Mobile und Distributed Computing aber auch aus den Bereichen neuer Kommunikationstechnologien, z.B. 5G und 6G, steigt die Nachfrage an Flexibilität beim ad-hoc Einsatz von mobilen Systemen aus dem IT- und OT-Bereich.

Insbesondere passieren im industriellen Umfeld autonome mobile Einheiten, wie insbesondere fahrerlose Transportsysteme, beim Ausführen von Fahraufträgen regelmäßig auf ihrer Route befindliche, i.d.R. statische, ortsgebundene, Passierelemente wie insbesondere Türen und Sicherheitsbereiche. Diese Passierelemente müssen zeitgenau gesteuert werden, damit die mobilen Einheiten ihre Aufträge ausführen können.

Gelöst werden soll dieses Problem auf eine automatisierte, generische und universelle Weise.

Es ist daher Aufgabe der Erfindung, ein vor dem Hintergrund des Standes der Technik verbessertes Verfahren zum Steuern von ortsfesten Passierelementen anzugeben. Ferner ist es Aufgabe der Erfindung, ein verbessertes ortsfestes Passierelement sowie ein Netzwerk zu schaffen. Mittels der Erfindung soll ein Steuern von ortsfesten Passierelementen insbesondere administrativ vereinfacht sein und eine flexible Erweiterung industrieller Umgebungen um zusätzliche Passierelemente und/oder mobiler Einheiten ermöglichen.

Diese Aufgabe der Erfindung wird mit einem Verfahren zum Steuern von ortsfesten Passierelementen mit den in Anspruch 1 angegebenen Merkmalen sowie mit einem ortsfesten Passierelement mit den in Anspruch 9 angegebenen Merkmalen sowie mit einem Netzwerk mit den in Anspruch 10 angegebenen Merkmalen gelöst. Bevorzugte Weiterbildungen der Erfindung sind in den zugehörigen Unteransprüchen, der nachfolgenden Beschreibung und der Zeichnung angegeben.

Das erfindungsgemäße Verfahren dient zum Steuern von ortsfesten Passierelementen mittels mobiler Einheiten. Bei dem erfindungsgemäßen Verfahren folgen die mobilen Einheiten einem Pfad entlang mindestens eines Passierelementes und dem Passierelement ist ein erster Ort zur Freigabe des Passierelements zugeordnet. Bei dem erfindungsgemäßen Verfahren wird mittels der mobilen Einheiten ein Erreichen des ersten Orts durch die mobile Einheit mittels mindestens einer Publish-Subscribe-Nachricht publiziert, mittels der das Passierelement zur Freigabe des Pfads aufgefordert wird.

Vorteilhaft können bei dem erfindungsgemäßen Verfahren grundsätzlich verschiedenartige Typen von Passierelementen auf eine einheitliche und universelle Art und Weise von verschiedenartigen mobilen Einheiten gesteuert werden. Erfindungsgemäß ist kein direktes Wissen in den mobilen Einheiten über konkret eingesetzte Passierelemente erforderlich, um mit diesen in Kontakt treten zu können, d.h. es werden keine direkten Kommunikationsverbindungen und herstellerspezifischen Kommunikationsprotokolle benötigt, um spezifische Steuerbefehle für Freigabeaktionen an spezifische ortsgebundene Passierelemente absetzen zu können. Der Aufwand zum Engineering, zur Programmierung und zur Konfiguration der mobilen Einheiten und der ortsgebundenen Passierelemente wird dadurch signifikant reduziert.

Weiterhin vorteilhaft kann bei dem erfindungsgemäßen Verfahren die Ausführung von konkreten Funktionen des ortsgebundenen Passierelements, etwa das Öffnen oder das Schließen einer Tür des Passierelements, von der generischen Freigabeaktion entkoppelt werden. Der Aufwand zum Engineering und zur Programmierung der mobilen Einheiten und der ortsgebundenen Passierelemente wird dadurch signifikant reduziert.

Konfiguration und Inbetriebnahme der Passierelemente sind erfindungsgemäß mit deutlich verringertem Aufwand möglich. Statische ortsgebundene Passierelemente müssen nur einmalig mit einem ersten Ort assoziiert werden. Dynamische ortsgebundene Einheiten, die ihre Position verändern können, müssen bei jeder Neupositionierung mit neuen ersten Orten verknüpft werden.

Unter "ortsfest" ist im Rahmen der vorliegenden Erfindungsmeldung vorzugsweise "gegenüber der Erdoberfläche unbewegt" zu verstehen.

Bevorzugt ist bei dem erfindungsgemäßen Verfahren dem mindestens einen Passierelement ein zweiter Ort zum Sperren des Passierelements zugeordnet, wobei mittels der mobilen Einheiten ein Erreichen des zweiten Orts durch die mobile Einheit mittels mindestens einer Publish-Subscribe-Nachricht publiziert wird, mittels der das Passierelement zum Sperren des Pfads aufgefordert wird.

Erfindungsgemäß ist kein direktes Wissen in den mobilen Einheiten über konkrete Passierelemente erforderlich, um mit diesen zur Einleitung eines Sperrens der Passierelemente in Kontakt treten zu können. Es werden insbesondere keine direkten Kommunikationsverbindungen und herstellerspezifischen Kommunikationsprotokolle benötigt, um spezifische Steuerbefehle für Sperraktionen an spezifische ortsgebundene Passierelemente absetzen zu können. In dieser Weiterbildung der Erfindung lässt sich zudem die Ausführung von konkreten Funktionen des ortsgebundenen Passierelements von der erfindungsgemäß möglichen generischen Sperraktion entkoppeln. Bei einer statischen Positionierung des mindestens einen Passierelements muss der zweite Ort zudem nur einmal mit dem Passierelement verknüpft werden. In dieser Weiterbildung der Erfindung sind Konfiguration und Inbetriebnahme folglich noch weiter vereinfacht.

Zweckmäßig enthält bei dem Verfahren gemäß der Erfindung die mindestens eine Publish-Subscribe-Nachricht jeweils den ersten oder zweiten Ort als Payload. Anhand des Payloads lassen sich die für das jeweilige Passierelement relevanten Informationen in Abhängigkeit von dem ersten oder zweiten Ort leicht filtern.

In einer vorteilhaften Weiterbildung des erfindungsgemäßen Verfahrens enthält die mindestens eine Publish-Subscribe-Nachricht den ersten oder zweiten Ort als Topic-Identifier. Anhand des Topic-Identifiers lassen sich die für das jeweilige Passierelement relevanten Informationen in Abhängigkeit von dem ersten oder zweiten Ort leicht filtern.

Vorzugsweise wird bei dem Verfahren gemäß der Erfindung, die mindestens eine Publish-Subscribe-Nachricht gemäß dem DDS-Standard publiziert. Der DDS-Standard ist ein etablierter brokerloser Publish-Subscribe-Standard, der mit den bekannten Vorteilen dieses Standards für die Ausführung des erfindungsgemäßen Verfahrens herangezogen werden kann.

Alternativ und ebenfalls bevorzugt wird in einer Weiterbildung des erfindungsgemäßen Verfahrens die mindestens eine Publish-Subscribe-Nachricht gemäß dem MQTT-Standard publiziert. Der MQTT-Standard ist ein etablierter brokerbasierter Publish-Subscribe-Standard, der mit den bekannten Vorteilen dieses Standards für die Ausführung des erfindungsgemäßen Verfahrens herangezogen werden kann.

In weiteren Weiterbildungen des erfindungsgemäßen Verfahrens können andere brokerlose oder brokerbasierte Publish-Subscribe-Standards für die Ausführung des Verfahrens herangezogen werden.

Zweckmäßig umfasst bei dem erfindungsgemäßen Verfahren das Passierelement mindestens ein Tor und/oder eine Schranke und/oder ein Pfadblockademittel.

Vorteilhaft wird in einer Weiterbildung das erfindungsgemäße Verfahren mit einer mobilen Einheit in Gestalt eines autonomen Transportfahrzeugs ausgeführt. Insbesondere in dem industriellen Anwendungsfall autonomer Transportfahrzeuge können mittels des erfindungsgemäßen Verfahrens leicht konfigurierbare und administrierbare industrielle Netzwerke aufgesetzt werden, da die Kommunikation von autonomen Transportfahrzeugen mit den Passierelementen von gerätespezifischen Besonderheiten entkoppelt ist. Daher sind solche industriellen Systeme mit autonomen Transportfahrzeugen besonders leicht anpassbar und skalierbar.

Das erfindungsgemäße Passierelement ist zur Verwendung in einem erfindungsgemäßen Verfahren wie vorhergehend beschrieben ausgebildet. Dazu ist dem erfindungsgemäßen Passierelement ein erster Ort zum Freigeben des Passierelements zugeordnet. Das Passierelement ist eingerichtet, von mobilen Einheiten publizierte Publish-Subscribe-Nachrichten zur Freigabe eines an dem Passierelement entlangführenden Pfades zu abonnieren und hinsichtlich der Information über eine Übereinstimmung des Orts der mobilen Einheiten mit dem ersten Ort zu filtern und abhängig von der Übereinstimmung den Pfad freizugeben.

Bei einer Weiterbildung des erfindungsgemäßen Passierelements ist dem erfindungsgemäßen Passierelement ein zweiter Ort zum Sperren des Passierelements zugeordnet. Das Passierelement ist eingerichtet, von mobilen Einheiten publizierte Publish-Subscribe-Nachrichten zum Sperren eines an dem Passierelement entlangführenden Pfades zu abonnieren und hinsichtlich der Information über eine Übereinstimmung des Orts der mobilen Einheiten mit dem zweiten Ort zu filtern und abhängig von der Übereinstimmung den Pfad zu sperren.

Das erfindungsgemäße Netzwerk umfasst mindestens ein erfindungsgemäßes Passierelement wie vorhergehend beschrieben sowie mindestens eine mobile Einheit, die zur Ausführung eines erfindungsgemäßen Verfahrens wie vorhergehend beschrieben ausgebildet ist.

Nachfolgend wird die Erfindung anhand in der Zeichnung dargestellter Ausführungsbeispiele näher erläutert.

Es zeigen:
- Fig. 1: ein erfindungsgemäßes industrielles Netzwerk von miteinander gekoppelten autonomen Transportfahrzeugen und erfindungsgemäßen Passierelementen in Gestalt von Toren, welche mit den autonomen Transportfahrzeugen mittels Publish-Subscribe-Kommunikation gekoppelt sind, bei der Ausführung eines erfindungsgemäßen Verfahrens zum Steuern von ortsfesten Passierelementen sowie
- Fig. 2: das erfindungsgemäße Verfahren zum Steuern von ortsfesten Passierelementen gemäß Fig. 1 schematisch in einer Prinzipskizze.

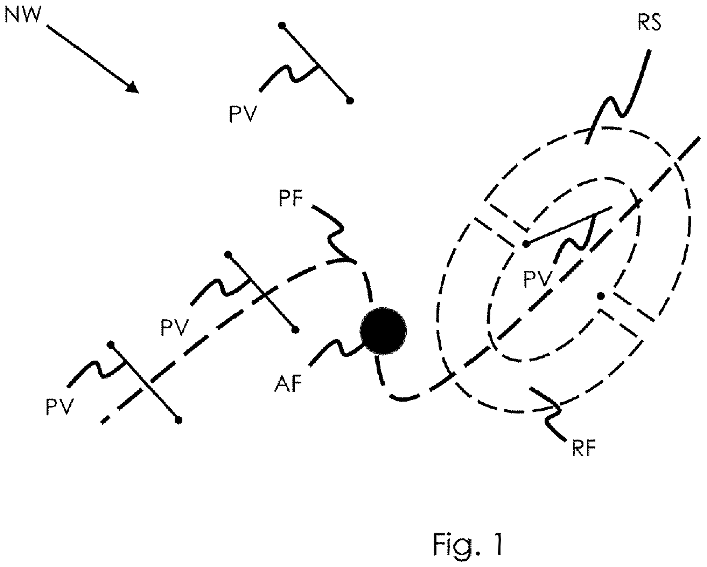

Das in Fig. 1 dargestellte erfindungsgemäße industrielle Netzwerk NW umfasst autonome Transportfahrzeuge AF, welche selbständig Pfade PF wählen, um Transportaufgaben zu erfüllen.

Auf ihren Pfaden PF passieren die autonomen Transportfahrzeuge ortsfeste Passierelemente in Form von Toren PV, welche den von autonomen Transportfahrzeugen AF jeweils befahrenen Pfad PF freigeben oder sperren. Zum Freigeben öffnen die Tore PV eine Schranke und zum Sperren des Pfades PF schließen die Tore PV diese Schranke. In weiteren, nicht eigens dargestellten Ausführungsbeispielen können die Tore PV mit Türen oder mit Rolltoren gebildet sein. In weiteren, nicht eigens dargestellten Ausführungsbeispielen, welche im Übrigen dem dargestellten Ausführungsbeispiel entsprechen, können die Passierelemente auch sonstige in den Pfad einfahrbare Blockierelemente in den Pfad einfahren oder aus dem Pfad ausfahren, etwa aus dem Boden ausfahrende Blockierelemente in Gestalt von Toren oder Säulen.

Im voreingestellten Zustand sind die Tore PV jeweils geschlossen, d. h. der Pfad PF ist jeweils nicht von autonomen Transportfahrzeugen AF befahrbar. Bezüglich einer Durchfahrtrichtung der Tore PV befindet sich durchfahrtrichtungsaufwärts eine Freigaberegion RF, in welcher ein autonomes Transportfahrzeug AF die Tore PV um ein Freigeben des Pfades PF ersuchen können. Durchfahrtsrichtungsabwärts eines Tores PV befindet sich eine Sperrregion RS, in welcher das autonome Transportfahrzeug AF ein Sperren des Tores PV veranlasst.

Die autonomen Transportfahrzeuge AF und die Tore PV stehen miteinander mittels Publish-Subscribe-Kommunikation in datentechnischer Verbindung.

Die autonomen Transportfahrzeuge AF publizieren beim Befahren einer Freigaberegion RF des Tores PV ihre Position an der Freigaberegion RF als Payload einer Freigabenachricht, welche unter dem Topic "Freigabeanfragen" mittels der Publish-Subscribe-Kommunikation publiziert wird.

Sämtliche Tore PV haben das Topic "Freigabeanfragen" abonniert und prüfen bei jeder eingehenden Freigabenachricht, ob die mit dem Payload übermittelte, konkrete Freigaberegion RF, an der sich das autonome Transportfahrzeug AF befindet, zum jeweiligen Tor PV gehört oder nicht. Dazu weisen die Tore PV eine Steuerungseinrichtung auf, welche Teil des Tores PV ist und welche zur Publish-Subscribe-Kommunikation ausgebildet und eingerichtet sind. Diese Steuerungseinrichtungen abonnieren das Topic "Freigabeanfragen" und prüfen, ob für das jeweilige Tor eine Freigabeanfrage vorliegt oder nicht.

Das autonome Transportfahrzeug AF wartet nun in der Freigaberegion RF des Tores PV, bis die Steuereinrichtung des Tores PV das Tor PV mit einer Freigabenachricht freigibt. Das autonome Transportfahrzeug AF hat seinerseits das Topic "Freigaben" abonniert, unter welchem das Tor PV seine Freigabenachricht publiziert. Nach Erhalt der Freigabenachricht passiert das autonome Transportfahrzeug AF das Tor PV entlang des Pfades PF. Nach dem Passieren des Tores PV durchquert das autonome Transportfahrzeug AF eine Sperrregion RS und publiziert eine Sperranfrage unter einem Topic "Sperranfragen". In der Sperranfrage ist die Sperrregion als Ortsangabe im Payload enthalten. Die Tore PV haben die Topics "Sperranfragen" abonniert und können diejenigen Sperranfragen, die sie jeweils hinsichtlich der Ortsangabe in Gestalt der Sperrregion RS betreffen, filtern. Wenn das zur Sperrregion RS gehörende Tor PV die Sperranfrage aufgrund der Sperrregion RS als für sich relevant erkennt, veranlasst es, d. h. seine Steuereinrichtung, die Schließung des Tores PV.

Auf diese Weise müssen die autonomen Transportfahrzeuge AF die jeweiligen Tore PV nicht kennen, sondern können aufgrund der Ortsangabe jeweils automatisch die Freigabeanfrage senden und nach dem Passieren des jeweiligen Tors PV automatisch die Sperranfrage senden. Die Tore PV wiederum müssen nicht eigens die autonomen Transportfahrzeuge AF kennen, sondern können aufgrund des Publish-Subscribe-Systems die jeweiligen Freigabeanfragen und die jeweiligen Sperranfragen aufgrund der jeweiligen Ortsangaben als für sich relevant zuordnen.

In einem alternativen Ausführungsbeispiel, welches im Übrigen dem dargestellten Ausführungsbeispiel entspricht, werden die Ortsangaben, insbesondere die Angaben zum Passieren einer Freigaberegion RF und einer Sperrregion RF, nicht als Payload übertragen, sondern die Ortsangaben definieren jeweils ortsabhängig eigene Topics. In diesem Ausführungsbeispiel müssen die Tore PV nicht sämtliche Freigabeanfragen nach dem Payload filtern, sondern die für das jeweilige Tor PV relevante Freigabe kann dann mittels Topic-Filterung gefiltert werden. Typischerweise umfassen die Topic-Beschreibungen einen geringeren Datenumfang als der jeweilige Payload und verbesserte Filtermöglichkeiten, sodass in diesem Ausführungsbeispiel das Verfahren mit einer weiter verbesserten Effizienz ausgeführt werden kann.

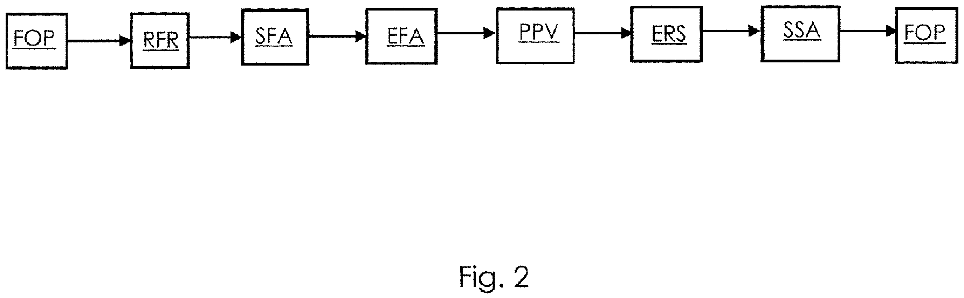

Das erfindungsgemäße Verfahren wird kurz noch einmal in Fig. 2 zusammengefasst:
In einem ersten Schritt FOP folgt das autonome Transportfahrzeug AF seinem geplanten Pfad PF.

In einem zweiten Schritt RFR erreicht das autonome Transportfahrzeug AF die Freigaberegion RF.

Dann sendet in einem dritten Schritt SFA das autonome Transportfahrzeug AF die Freigabeanfrage an die Tore PV mittels Publikation unter dem Topic "Freigabeanfragen".

In einem vierten Schritt EFA empfängt das autonome Transportfahrzeug AF die Freigabe.

In einem fünften Schritt PPV passiert das autonome Transportfahrzeug AF das Tor PV.

In einem sechsten Schritt ERS erreicht das autonome Transportfahrzeug AF die Sperrregion RS.

In einem siebten Schritt SSA sendet das autonome Transportfahrzeug AF die Sperranfrage an die Tore PV mittels Publikation unter dem Topic "Sperranfragen".

Danach setzt in einem achten Schritt FOP das autonome Transportfahrzeug AF die Fahrt entlang seines geplanten Pfades PF fort.

## Patentansprüche

1. Verfahren zum Steuern von ortsfesten Passierelementen (PV) mittels mobiler Einheiten (AF), bei welchem die mobilen Einheiten (AF) einem Pfad (PF) entlang mindestens eines Passierelementes (PV) folgen und dem Passierelement (PV) ein erster Ort (RF) zur Freigabe des Passierelements (PV) zugeordnet ist, wobei mittels der mobilen Einheiten (AF) ein Erreichen des ersten Orts (RF) durch die mobile Einheit (AF) mittels mindestens einer Publish-Subscribe-Nachricht publiziert wird, mittels der das Passierelement (PV) zur Freigabe des Pfads (PF) aufgefordert wird.

2. Verfahren nach Anspruch 1, bei welchem dem mindestens einen Passierelement (PV) ein zweiter Ort (RS) zum Sperren des Passierelements (PV) zugeordnet ist, wobei mittels der mobilen Einheiten (AF) ein Erreichen des zweiten Orts (RS) durch die mobile Einheit (AF) mittels mindestens einer Publish-Subscribe-Nachricht publiziert wird, mittels der das Passierelement (PV) zum Sperren des Pfads (PF) aufgefordert wird.

3. Verfahren nach einem der vorhergehenden Ansprüche, bei welchem die mindestens eine Publish-Subscribe-Nachricht jeweils den ersten (RF) oder zweiten Ort (RS) als Payload enthält.

4. Verfahren nach einem der vorhergehenden Ansprüche, bei welchem die mindestens eine Publish-Subscribe-Nachricht den ersten (RF) oder zweiten Ort (RS) als Topic-Identifier enthält.

5. Verfahren nach einem der vorhergehenden Ansprüche, bei welchem die mindestens eine Publish-Subscribe-Nachricht gemäß dem DDS-Standard publiziert wird.

6. Verfahren nach einem der vorhergehenden Ansprüche, bei welchem die mindestens eine Publish-Subscribe-Nachricht gemäß dem MQTT-Standard publiziert wird.

7. Verfahren nach einem der vorhergehenden Ansprüche, bei welchem das Passierelement (PV) mindestens ein Tor, eine Schranke oder ein Pfadblockademittel umfasst.

8. Verfahren nach einem der vorhergehenden Ansprüche, welches mit einer mobilen Einheit (AF) in Gestalt eines autonomen Transportfahrzeugs ausgeführt wird.

9. Passierelement, ausgebildet zur Verwendung in einem Verfahren nach einem der vorhergehenden Ansprüche, welchem ein erster Ort (RF) zum Freigeben des Passierelements (PF) zugeordnet ist, welches eingerichtet ist, von mobilen Einheiten (AF) publizierte Publish-Subscribe-Nachrichten zur Freigabe eines an dem Passierelement (PV) entlangführenden Pfades (PF) zu abonnieren und hinsichtlich der Information über eine Übereinstimmung des ersten Orts (RF) der mobilen Einheiten (AF) mit dem ersten Ort (RF) zu filtern und abhängig von der Übereinstimmung den Pfad (PF) freizugeben.

10. Netzwerk, umfassend mindestens ein Passierelement (PV) nach einem der vorhergehenden Ansprüche sowie mindestens eine mobile Einheit (AF), welche zur Ausführung eines Verfahrens nach einem der vorhergehenden Ansprüche ausgebildet ist.
